# EUROPEAN PATENT APPLICATION

(11) **EP 2 611 026 A1**
(43) Date of publication of application: **03.07.2013**
(21) Application number: 11195969.8
(22) Date of filing: 28.12.2011
(51) Int. Cl.: H02P 9/48, H02P 29/02, F02C 7/32

(54) **Generator excitation during load fault conditions**

(71) Applicant: Hamilton Sundstrand Corporation, Windsor Locks, CT 06096-1010 (US)
(72) Inventor: Jones, Stephen R., Rockford, IL 61114 (US); Swenson, Josh C., Rockford, IL 61107 (US)
(74) Representative: Tomlinson, Kerry John

(57) **Abstract**

A mechanism is provided for generator excitation during a fault condition. A low spool generator (205) is coupled to a low spool shaft (410). A high spool generator (230) is coupled to a high spool shaft (310). When a fault occurs, the low spool generator (205) provides excitation current to coils (320) of the high spool generator (230) such that a magnetic field is produced in the coils.

## Description

### BACKGROUND

Exemplary embodiments relate to electrical architectures for aircraft, and more specifically, to electrical power generation.

Conventional two spool turbofan engines have a power takeoff from the high pressure spool. The high pressure spool is mechanically connected to an airframe mounted accessory drive which provides both electrical and hydraulic on board power for the airframe. Other configurations may include a single spool or three spool engines.

An increasing number of airplanes require significant electric power for operation. Typically, electrical generators are driven by a high pressure spool (also referred to as a high spool shaft, high spool, high speed spool, etc.) through a power takeoff shaft. Due to modem airplane fuel efficiency requirements, the electric power demand may be increasing beyond the power extraction potential of the engine high pressure spool.

Power extraction is available from the low pressure spool of the engine, but the speed range is significantly wider than the high pressure spool. As a result, generators must be specially designed for use with the wider speed range low spool to achieve the desired electrical output from a low spool-driven generator. Airplane and engine manufacturers are looking for ways to extract electric power and other accessory power from the low pressure spool in a cost effective and efficient manner.

### BRIEF SUMMARY

According to exemplary embodiments, a system is provided for generator excitation during a fault condition. A low spool generator is coupled to a low spool shaft. A high spool generator is coupled to a high spool shaft. When a fault occurs, the low spool generator provides excitation current to coils of the high spool generator such that a magnetic field is produced in the coils.

According to exemplary embodiments, a low spool generator is provided. A rotor is coupled to a low spool shaft of an aircraft engine. Low spool generator coils produce a magnetic field, and the low spool generator coils are positioned around the rotor. Connectors are operatively connected to the coils. When the rotor is rotated by the low spool shaft, voltage is produced at the connectors. In response to a fault occurring for a high spool generator, the connectors provide excitation current to high spool coils of the high spool generator to produce a magnetic field in the high spool coils.

Additional features are realized through the techniques of the present disclosure. Other systems, methods, apparatus, and/or computer program products according to other embodiments are described in detail herein and are considered a part of the claimed invention. For a better understanding of exemplary embodiments and features, refer to the description and to the drawings.

### BRIEF DESCRIPTION OF THE SEVERAL VIEWS OF THE DRAWINGS

The subject matter which is regarded as the invention is particularly pointed out and distinctly claimed in the claims at the conclusion of the specification. The foregoing and other features of the present disclosure are apparent from the following detailed description taken in conjunction with the accompanying drawings in which:

FIG. 1 illustrates a block diagram of an electrical architecture in accordance with exemplary embodiments.

FIG. 2 illustrates a block diagram of an electrical architecture in accordance with exemplary embodiments.

FIG. 3 illustrates a block diagram of a generator in relation to an engine in accordance with exemplary embodiments.

FIG. 4 illustrates a block diagram of a generator in relation to an engine in accordance with exemplary embodiments.

FIG. 5 illustrates a flow chart in accordance with exemplary embodiments.

### DETAILED DESCRIPTION

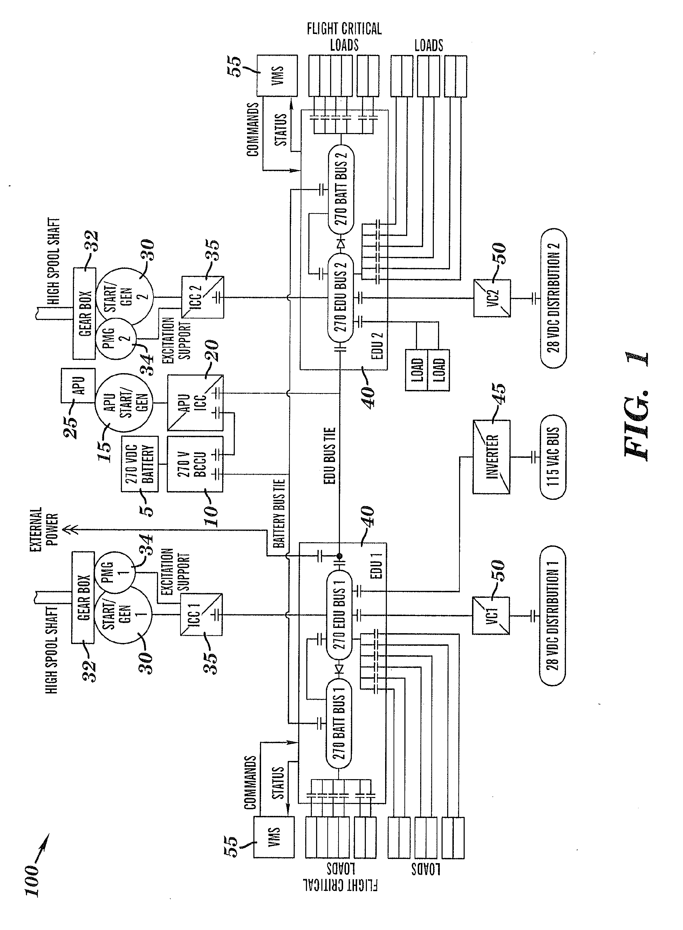

FIG. 1 illustrates a block diagram 100 of an electrical architecture for an aircraft.

The diagram 100 includes a 270 Vdc (volts direct current) battery 5 that provides electrical energy storage at 270 Vdc. Power to and from the 270 Vdc battery 5 flows through a battery charge control unit (BCCU) 10.

The diagram 100 includes an auxiliary power unit (APU) starter/generator 15. Power to and from the APU starter/generator 15 flows through, and is controlled by, an APU inverter converter controller (ICC) 20. The APU starter/generator 15 starts the APU engine 25 using energy from the 270 Vdc battery 5. When the APU engine 25 has started, the APU starter/generator 15 provides auxiliary electrical power to the aircraft.

The aircraft may include starter/generator 30 which is a starter/generator 1 and starter/generator 2. Both starter/generators 30 are on the same main engine of a single engine plane. For a two engine plane, at least one starter/generator 30 is on each main engine. The starter/generators 30 are mounted external to the engine on an accessory gearbox 32. The accessory gearbox 32 is connected by a tower shaft to the high-spool shaft of the engine. Power to and from each starter/generator 30 flows through, and is controlled by, its respective ICC 35. The starter/generator 30 takes electrical power from the APU 15 to start the main engine(s) (not shown). When the main engine(s) has started, the starter/generators 30 provide main electrical power to the aircraft.

There may be varied starter/generator 30 electrical machine technology. For example, the starter/generator 30 may be wound-field synchronous, switched reluctance, and/or induction as understood by one skilled in the art.

Switched reluctance and induction stai-ter/generators 30 typically are excited using the same feeders as their output power flows through. Load faults can reduce the output voltage and the dc link voltage of the ICC 35. The electrical machine which is the starter/generator 30 needs to remain excited under these conditions in order to prevent loss of electrical output. For these switched reluctance and induction starter/generators 30, excitation power in the ICC 35 can be supplemented by power fed from a permanent magnet generator (PMG) 34. PMGs 34 are mounted external to the engine on the accessory gearbox 32.

FIG. 1 also includes an electrical distribution unit (EDU) 40, such as EDU 1 and EDU 2. EDU 1 distributes power to and from ICC 1 and starter/generator 1. EDU 2 distributes power to and from ICC 2 and starter/generator 2. Each EDU 40 has a 270 Vdc EDU bus to feed aircraft loads. Each EDU 40 has a battery backed 270 Vdc bus for flight-critical loads. EDU 1 supplies power to an inverter 45 for 115 Vac loads (not shown) via a 115 Vac bus.

The EDUs 40 supply power to voltage converters (VC) 50 for 28 Vdc loads (not shown). The EDUs 40 receive open and close commands from a vehicle management system (VMS) 55. The EDUs 40 send status information to the VMS 55.

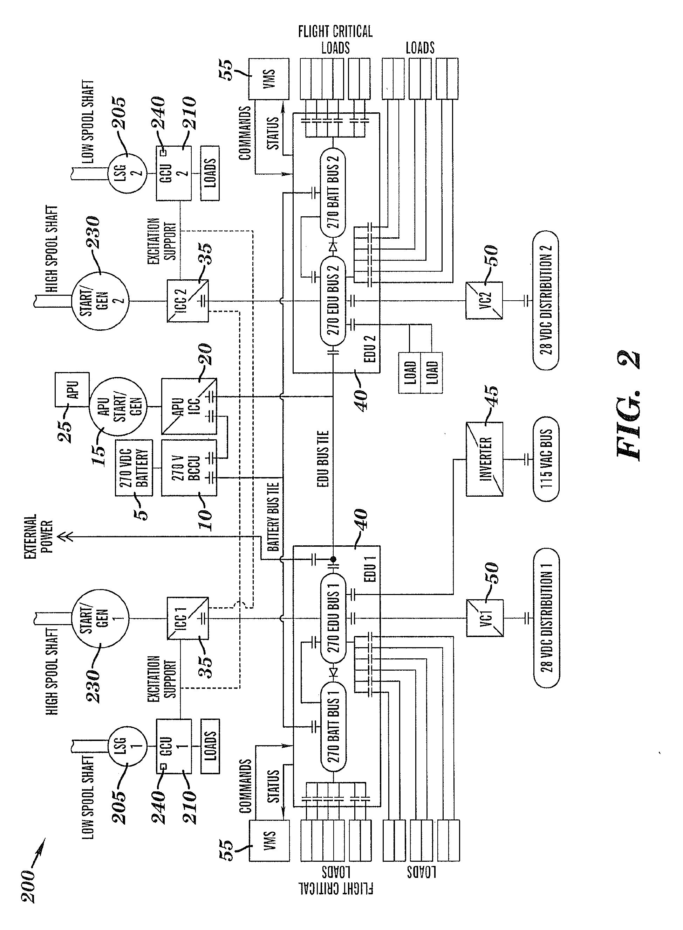

FIG. 2 illustrates a block diagram 200 of an electrical architecture according to exemplary embodiments. In the block diagram 200, the PMG 34 is not included, and the starter/generators 30 are replaced by starter/generators 230. Also, the aircraft in diagram 200 further includes a low spool generator (LSG) 205 for each engine, such as LSG 1 and LSG 2. Power to and from the LSG 205 flows through and is controlled by its respective GCU 210.

In the future, aircraft may have even greater electrical power requirements than currently required. It is anticipated that electrical power requirements will exceed the power extraction capability of the engine high spool shaft (also referred to as high-spool). The engine low-spool shaft (also referred to as low-spool) has much greater power extraction capability and so future aircraft will have engines with low spool generators (LSG) 205 as discussed herein. As engine start is not effective via the low-spool (i.e., low spool shaft), an electrical machine (i.e., starter/generator 230) on the high spool (or intermediate spool of multi-spool turbofan engines) is still required.

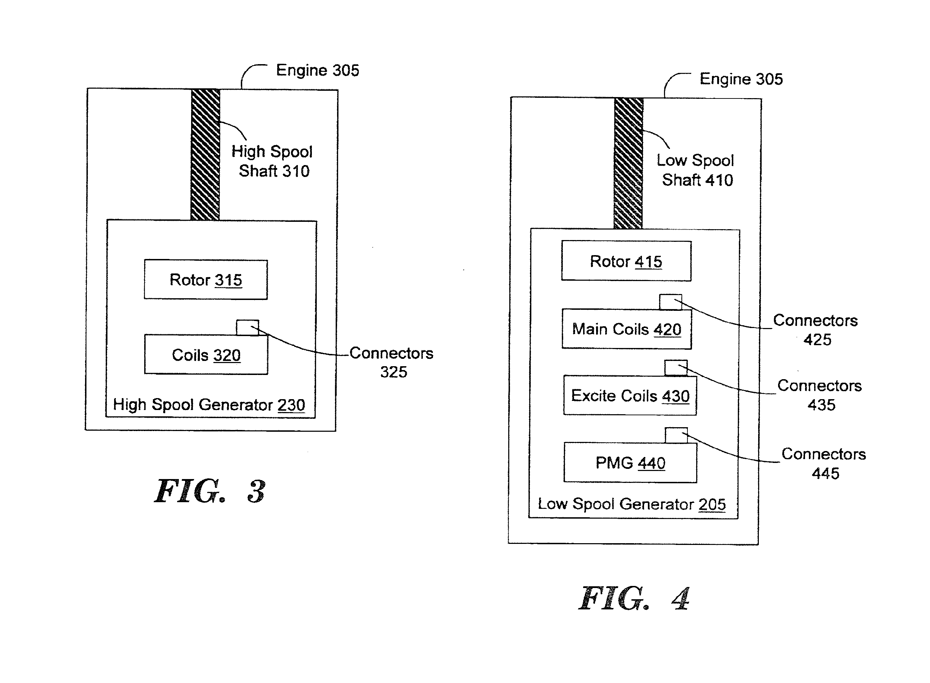

In order to reduce the size and weight of the engine, future aircraft may not have the accessory gearbox 32 (as shown in FIG. 1) on the engine. Hence, the starter/generator 230 is embedded in the engine on the high spool shaft of the engine as depicted in FIG. 2 (and further shown in FIG. 3) without the gearbox 32. Although the starter/generator 30 and 230 may implement the same functions for the aircraft, the starter/generator 230 is embedded in the engine on the high spool shaft while the starter/generator 30 is mounted external to the engine. Typically, embedded starter/generator 230 is referred to as integral starter/generator (ISG) 230. Embedding the starter/generator 230 on the high spool of the engine requires generator technology that can survive the internal engine environment. Switched reluctance and/or induction machines such as, e.g., starter/generator 230, typically can survive that environment. Wound-field and/or permanent magnet synchronous machines typically cannot.

As stated above, switched reluctance and/or induction machine generator based systems, externally mounted on the engine gearbox, need to include permanent magnet generators such as PMG 34 in FIG. 1 (or some other means) to provide excitation in the event of a load fault. Embedding the PMG 34 in the engine to support the ISG 230 system could be problematic. For example, high engine temperatures may cause demagnetization of the magnets in the PMG 34. To de-excitate the PMG 34, in the event of a PMG 34 fault, would require shutting down the engine to stop rotation of the high-spool shaft. This would be undesirable for an engine providing aircraft propulsion, as understood by one skilled in the art.

In accordance with exemplary embodiments, future electrical systems could include both high-spool mounted ISGs 230 and low-spool generators (LSGs) 205. Low-spool generators 205, although integrated on the engine, can be of the wound-field synchronous machine type because the low-spool generators 205 are located away from the combustor in a lower temperature region of the engine and/or can be supplied with cooling air flow from the fan. These wound-field synchronous machines (LSG 205) are separately excited through an internal PMG and excitation coil as illustrated in FIG. 4, and excitation can be maintained in the event of a fault. The GCU 210 controls the voltage and current from the LSG 205 by varying the current through the excitation coil.

The LSG 205 will provide power to aircraft loads, which can be AC or DC loads. DC loads requires that a rectifier be located within the LSG 205. These loads may be connected directly to the LSG 205, connected through additional buses within the EDU 40, or connected via additional EDUs 40. The LSG 205 can also be used to support ISG excitation of the ISG 230 in the event of an ISG load fault through a secondary low power output.

For a twin engine aircraft there will be one LSG 205 on each engine. Each LSG 205 can source power, from its GCU/dual rectifier 210, to the corresponding ISG ICC 35. For a single engine aircraft, the one LSG 205 can source power, from its GCU/dual rectifier, to both ISG ICCs 35.

The GCU 210 may comprise a fault detecting circuit 240 to detect the ISG load fault via, e.g., the ICC 35. Also, the GCU 210 may be directly connected to the ISG 230 to detect the ISG load fault via the fault detecting circuit 240. Additionally and/or alternatively, the ICC 35 may include the fault detecting circuit 240 to detect the ISG load fault of the ISG 230 and ICC 35 combination, and the ICC 35 instructs the GCU 210 that the ISG load fault occurred for the ISG 230, which may be starter/generator 1 and/or starter/generator 2 in FIG. 2.

When the GCU 210 determines that the load fault has occurred and/or when the ICC 35 instructs (e.g., by a request for excitation voltage for the ISG 230) that the fault has occurred, the GCU 210 provides excitation voltage from the LSG 205 to the ISG 230 and ICC 35 combination that is connected to the fault. For example, the LSG 2 may provide excitation voltage to the ISG 2 via the ICC 2 to maintain excitation of ISG 2, after the GCU 210 determines that the load fault has occurred.

FIG. 3 illustrates an example of the starter/generator 230 also referred to as the high spool generator 230 according to exemplary embodiments. It is understood that various implementations of the starter/generator 230 may be designed as desired by one skilled in the art. The starter/generator 230 is internally mounted in an aircraft engine 305, i.e., embedded in the engine 305. The starter/generator 230 includes a rotor 315 operatively coupled to a high spool shaft 310 of the engine 305, and the high spool shaft 310 rotates the rotor 315 when the engine 305 is operating. Since the starter/generator 230 is internally mounted in the engine 305, there is no gearbox connecting the rotor 315 to the engine 305. Coils 320 of the starter/generator 230 receive excitation current/voltage to produce a magnetic field via connectors 325. The coils 320 may be mounted on a stator (not shown) as understood by one skilled in the art. Also, the rotor 315 may have its own coils or windings. When the rotor 315 rotates (driven by the high spool shaft 310) within the magnetic field produced by the coils 320, the rotation of the rotor 315 (through the magnetic field) generates voltage and current at two or more connectors 325 of the coils 320 for a load. The connectors 325 are operatively connected to the ICC 35, such as ICC 1 and/or ICC 2, to provide voltage and current to the elements shown in FIGS. 1 and 2.

FIG. 4 illustrates an example of the low spool generator 205 according to exemplary embodiments. It is understood that various implementations of the low spool generator 205 may be designed as desired by one skilled in the art. The low spool generator 205 may be internally mounted in the aircraft engine 305, i.e., embedded in the engine 305, and/or in one implementation, the low spool generator 205 may be externally mounted to the engine 305 via, e.g., a gearbox or shaft (not shown). The low spool generator 205 includes a rotor 415 operatively coupled to a low spool shaft 410 of the engine 305, and the low spool shaft 410 rotates the rotor 415. Main coils 420 of the low spool generator 205 receive excitation current/voltage to produce a magnetic field via excite (excitation) coils 430. The excite coils 430 receive current/voltage via connectors 435. A permanent magnet generator 440 includes connectors 445 which are operatively connected to the connectors 435 of the excite coils 430. The permanent magnet generator 440 provides excitation current/voltage to the excite coils 430 via the connectors 445 and 435. The main coils 420 and excite coils 430 may be mounted on a stator (not shown) as understood by one skilled in the art. Also, the rotor 415 may have its own coils or windings. When the rotor 415 rotates (driven by the low spool shaft 410) within the magnetic field produced by the main coils 420, the rotation of the rotor 415 generates voltage and current at two or more connectors 425 of the main coils 420 for a load. The connectors 425 are operatively connected to the GCU 105, such as GCU 1 and/or GCU 2, to provide voltage and current to the elements shown in FIGS. 1 and 2. Also, when a fault occurs on the starter/generator 230, the connectors 425 provide excitation voltage and current from the low spool generator 205 via the GCU 105 connected to the ICC 35 to the stator/generator 230.

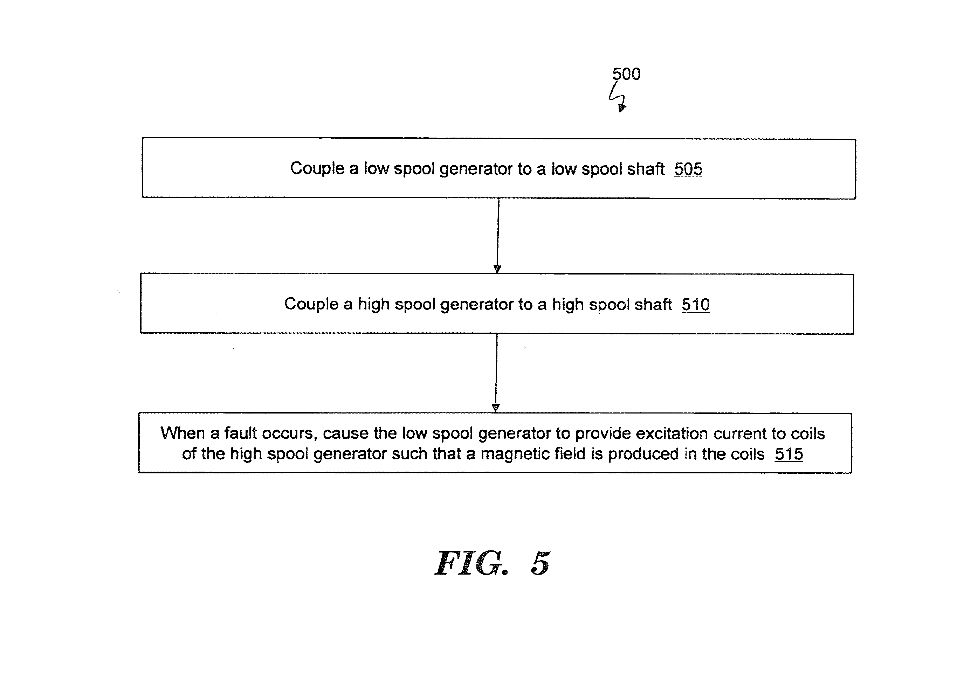

FIG. 5 illustrates a flow chart 500 of a method for the low spool generator 205 to provide excitation voltage and current to the starter/generator 230 when a fault occurs.

At operation 505, the low spool generator 205 is coupled to the low spool shaft 410.

At operation 510, the high spool generator 230 is coupled to the high spool shaft 310.

At operation 515, when a fault occurs, the low spool generator 205 provides excitation current to the coils 320 of the high spool generator 230 such that a magnetic field is produced in the coils 320 of the high spool generator 230. The high spool generator 230 does not comprise a permanent magnet generator to provide excitation current when the fault occurs. Moreover, the heat (operating temperature) of the aircraft engine 305 may be such that if a permanent magnet generator were included in the high spool generator 230, the permanent magnet generator may be demagnetized, and/or the permanent magnet generator may be unable to provide the excitation current to the high spool generator 230 during the fault. A permanent magnet generator may demagnetized if heated above its Curie temperature or Curie point. For example, a permanent magnet generator may be able to operate at a maximum temperate of 300°C (Celsius) or 572°F (Fahrenheit). So at or above 300°C, the permanent magnet generator may be demagnetized.

The generator control unit 210 coupled to the LSG 205 detects the fault of the high spool generator 230 and/or receives instructions that the fault occurs. The generator control unit 210 (e.g., via the circuit 240) causes the low spool generator 205 to provide the excitation voltage/current to the starter/generator 230. The fault may include a short circuit, a power surge, a malfunction of the starter/generator 230, and/or an overload. Also, the fault may occur on the starter/generator 230 and may cause the starter/generator 230 to at least one of stop running and/or stop producing electricity. The starter/generator 230 is not self-excited and thus needs excitation current and voltage.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one ore more other features, integers, steps, operations, element components, and/or groups thereof.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. Many modifications and variations will be apparent to those of ordinary skill in the art without departing from the scope of the invention, which is defined by the claims. The embodiment was chosen and described in order to best explain the principles of the invention and the practical application, and to enable others of ordinary skill in the art to understand the invention for various embodiments with various modifications as are suited to the particular use contemplated

The flow diagrams depicted herein are just one example. There may be many variations to this diagram or the steps (or operations) described therein without departing from the spirit of the invention. For instance, the steps may be performed in a differing order or steps may be added, deleted or modified. All of these variations are considered a part of the claimed invention.

While the exemplary embodiments of the invention have been described, it will be understood that those skilled in the art, both now and in the future, may make various improvements and enhancements which fall within the scope of the claims which follow. These claims should be construed to maintain the proper protection for the invention first described.

## Claims

1. A system for generator excitation during a fault condition, comprising:
a low spool generator coupled to a low spool shaft; and
a high spool generator coupled to a high spool shaft;
wherein when a fault occurs, the low spool generator provides excitation current to coils of the high spool generator such that a magnetic field is produced in the coils.

2. The system of claim 1, wherein the high spool generator is internally mounted in an aircraft engine; preferably wherein the high spool generator is located in a portion of the aircraft engine configured to operate at a temperature above a demagnetization temperature of a permanent magnet, thereby inhibiting permanent magnet-based generation of excitation current in the high spool generator during the fault.

3. The system of claim 2, wherein the high spool generator does not comprise a permanent magnet to provide excitation current when the fault occurs.

4. The system of claim 1, 2 or 3, further comprising:
a generator control unit coupled to the low spool generator, preferably configured to detect a fault of the high spool generator and/or receive instructions that a fault has occurred.

5. The system of claim 4, wherein the generator control unit causes the low spool generator to provide the excitation voltage to the high spool generator.

6. The system of any preceding claim, wherein the fault comprises at least one of a short circuit, a power surge, a malfunction of the high spool generator, and an overload; and/or wherein the fault occurs on the high spool generator or a load connected to the high spool generator; and/or wherein the fault causes the high spool generator to at least one of stop running and stop producing electricity.

7. The system of any preceding claim, wherein the high spool generator is not self-excited.

8. The system of any preceding claim, wherein the low spool shaft rotates a rotator of the low spool generator to generate electricity;
wherein the high spool shaft rotates a rotator of the high spool shaft to generate electricity; and
wherein the low spool shaft and the high spool shaft are operatively connected to an aircraft engine.

9. A low spool generator for the system of any preceding claim, comprising:
a rotor coupled to a low spool shaft of an aircraft engine;
low spool generator coils for producing a magnetic field, wherein the low spool generator coils are positioned around the rotor; and
connectors operatively connected to the coils;
wherein when the rotor is rotated by the low spool shaft, voltage is produced at the connectors;
wherein in response to a fault occurring for a high spool generator, the connectors provide excitation current to a high spool coils of the high spool generator to produce a magnetic field in the high spool coils.

10. A method for generator excitation during a fault condition, comprising:
coupling a low spool generator to a low spool shaft; and
coupling a high spool generator to a high spool shaft;
when a fault occurs, causing the low spool generator to provide excitation current to coils of the high spool generator such that a magnetic field is produced in the coils.

11. The method of claim 10, wherein the high spool generator is internally mounted in an aircraft engine; preferably wherein the high spool generator is located in a portion of the aircraft engine configured to operate at a temperature above a demagnetization temperature of a permanent magnet, thereby inhibiting permanent magnet-based generation of excitation current in the high spool generator during the fault.

12. The method of claim 11, wherein the high spool generator does not comprise a permanent magnet to provide excitation current when the fault occurs.

13. The method of claim 10, 11 or 12, further comprising:
coupling a generator control unit to the low spool generator.

14. The method of claim 13, wherein the generator control unit at least one of detects the fault of the high spool generator and receives instructions that the fault occurs.

15. The method of claim 14, wherein in response to the at least one of detects the fault of the high spool generator and receives instructions that the fault occurs, the generator control unit causes the low spool generator to provide the excitation voltage to the high spool generator.
